# EUROPÄISCHE PATENTSCHRIFT

(11) **EP 4 534 348 B1**
(45) Veröffentlichungstag und Bekanntmachung des Hinweises auf die Patenterteilung: **25.03.2026**
(21) Anmeldenummer: 24203937.8
(22) Anmeldetag: 01.10.2024
(51) Int. Cl.: B60N 2/34, B60N 2/20, B60N 2/22, B60N 2/60, B62D 33/06

(54) **NUTZFAHRZEUGKABINE MIT EINER SITZ-LIEGE-VORRICHTUNG**
COMMERCIAL VEHICLE CAB WITH A SEATING-SLEEPING DEVICE
CABINE DE VÉHICULE UTILITAIRE DOTÉE D'UN DISPOSITIF D'ASSISE ET DE COUCHAGE

(30) Priorität: 06.10.2023 DE 102023127322
(43) Veröffentlichungstag der Anmeldung: 09.04.2025
(73) Patentinhaber: Traton AB, 151 87 Södertälje (SE)
(72) Erfinder: Gündogdu, Oguzhan, 80995 München (DE); Siflinger, Markus, 80995 München (DE)

(56) Entgegenhaltungen:
- CH-A- 555 755
- DE-A1- 4 215 111
- JP-U- S55 157 020
- US-B1- 6 622 321

## Beschreibung

Die Erfindung betrifft eine Nutzfahrzeugkabine mit einer Sitz-Liege-Vorrichtung. Die Erfindung betrifft ferner ein Nutzfahrzeug mit einer solchen Nutzfahrzeugkabine.

Die Nutzfahrzeugkabine (Fahrerkabine) eines Nutzfahrzeugs, vorzugsweise LKWs, dient dem Fahrer, insbesondere bei Fahrten auf langen Strecken, nicht nur der Steuerung des Nutzfahrzeugs, sondern üblicherweise auch als Aufenthaltsbereich während der Ruhe- und Pausenzeiten. Derartige Fahrerkabinen eines LKWs umfassen üblicherweise einen vorderen Bereich und einen hinteren Bereich. Im vorderen Bereich ist ein Fahrersitz, typischerweise ein oder mehrere Beifahrersitze und ein Cockpit-Bereich zur Bedienung des Nutzfahrzeugs angeordnet. Der hintere Bereich der Fahrerkabine dient als Aufenthaltsraum, z. B. im Nicht-Fahrbetrieb. Dort sind typischerweise zusätzliche Einrichtungsgegenstände zur nicht-fahrspezifischen Anwendung angeordnet, wie beispielsweise ein Bett, Stauraumlösungen etc..

Die DE 42 15 111 A1 zeigt eine zweiteiligen Schlafliege im Fahrerhaus eines Lastkraftwagens, wobei die Schlafliege entlang einer in Fahrzeugquerrichtung verlaufenden Teilfuge in eine Basisliege und in ein an die Fahrerhausrückwand hochschwenkbares Schwenkteil unterteilt wird, das als U-förmiger Bügel ausgebildet ist. Bei hochgeschwenktem Schwenkteil bildet dieses eine Rückenlehne, während die Basisliege die Funktion einer Sitzbank übernimmt.

Die US 6,622,321 B1 offenbart ein umwandelbares Möbelstück, das ein von einer Trägerstruktur gehaltenes Hauptpolster und eine Rückenlehne, die relativ zum Hauptpolster zwischen einer aufrechten Rück- und einer abgesenkten Vorwärtsposition beweglich ist, umfasst. Die Rückenlehne ist gelenkig aufgebaut und besteht aus einem inneren und einem äußeren Rückenteil. In aufrechter Rückposition ragt das äußere Rückenteil vom inneren Rückenteil aufwärts und stützt den oberen Rücken des Nutzers. In abgesenkter Vorwärtsposition wird das äußere Rückenteil relativ zum inneren Rückenteil nach unten und innen in eine unauffällige Verstauposition bewegt. Eine Verbindung zwischen Trägerstruktur und Rückenteilen ermöglicht diese Bewegung.

Die CH 555 755 zeigt eine Schlafliege für Fahrerhäuser von Lastkraftwagen, die in dem freien Raum hinter einem Fahrersitz und einem Beifahrersitz unterhalb der Rückwandfenster des Fahrerhauses angeordnet ist. Die Schlafliege ist längsseitig mittig klappbar ausgebildet und im hochgeklappten Zustand an der Fahrerhausrückwand lösbar befestigbar.

Die JP S 55157020 U betrifft eine Nutzfahrzeugkabine mit niedrigem Fahrersitz und guter seitlicher Sicht. Hinter dem Fahrersitz ist ein zweiteiliges Bett bestehend aus einem festen Teil und einem beweglichen Bettteil quer zur Fahrtrichtung angeordnet. Der bewegliche Teil kann bei Nichtgebrauch nach oben geklappt und verstaut werden. Das System enthält Schwenkund Sicherungsmechanismen sowie einen Schutzgurt zur Sicherung der liegenden Person.

Allerdings sind in bisherigen Lösungen diese nicht-fahrspezifischen Anwendungen nur in überschaubarem Rahmen und reduziert dargestellt. Das ergibt sich insbesondere aus dem begrenzten Platzangebot in der Fahrerkabine. Die Integration eines angemessenen Schlafbereichs stellt hier im Besonderen ein Problem dar, da ein für den Fahrer komfortabler Schlafbereich vergleichsweise viel Raum einnimmt, der dann nicht mehr anderweitig genutzt werden kann. Zwar gibt es bereits Versuche, dieses Problem zu lösen, indem beispielsweise eine Matratze des Schlafbereichs durch spezielle innere Strukturen ausziehbar gestaltet wird, diese sind allerdings technisch aufwendig und entsprechend teuer in der Herstellung, sowie umständlich und komplex in der Handhabung.

Der Erfindung liegt daher die Aufgabe zugrunde, eine verbesserte Technik zur Ausstattung einer Nutzfahrzeugkabine bereitzustellen, mit der Nachteile bisheriger Lösungen verhindert oder zumindest reduziert werden können. Insbesondere ist es eine Aufgabe der Erfindung eine Schlafmöglichkeit für eine Nutzfahrzeugkabine bereitzustellen, die sowohl komfortabel in der Benutzung, als auch kostengünstig in der Herstellung ist.

Diese Aufgaben werden durch die Merkmale des unabhängigen Anspruchs gelöst. Vorteilhafte Weiterbildungen sind in den abhängigen Ansprüchen und der Beschreibung angegeben.

Ein erster allgemeiner Aspekt der vorliegenden Offenbarung betrifft eine Nutzfahrzeugkabine. Die Nutzfahrzeugkabine ist vorzugsweise ein Fahrerhaus eines Lastkraftwagens.

Die Nutzfahrzeugkabine umfasst eine Sitz-Liege-Vorrichtung, die in einem hinteren Bereich der Nutzfahrzeugkabine angeordnet ist. Der hintere Bereich ist ein in Bezug auf die Vorwärtsfahrtrichtung hinterer Bereich der Nutzfahrzeugkabine. Die Sitz-Liege-Vorrichtung kann beispielsweise auch als Sitz-Liegemöbel oder als Bettcouch bezeichnet werden. Die Sitz-Liege-Vorrichtung weist ein erstes Teil, nachfolgend als Rückenlehnenteil bezeichnet, und ein horizontal ausgerichtetes zweites Teil, nachfolgend als Liegeteil bezeichnet, auf. Hierbei ist das Rückenlehnenteil zwischen einer ersten und einer zweiten Nutzungsposition bewegbar, vorzugsweise um wahlweise eine Couch-Konfiguration (in der ersten Nutzungsposition) oder eine Bettkonfiguration (in der zweiten Nutzungsposition) der Sitz-Liege-Vorrichtung einzustellen.

In der ersten Nutzungsposition (in der Couch-Konfiguration der Sitz-Liege-Vorrichtung) ist das Rückenlehnenteil vorzugsweise im Wesentlichen vertikal und/oder derart beabstandet zum Liegeteil angeordnet, dass das Rückenlehnenteil als Rücklehne und das Liegeteil als Sitzteil für einen Benutzer der Sitz-Liege-Vorrichtung nutzbar ist. Anders ausgedrückt ist das Rückenlehnenteil in der ersten Nutzungsposition (Couch-Konfiguration) so relativ zum Liegeteil angeordnet, dass die Sitz-Liegevorrichtung in der ersten Nutzungsposition für eine erwachsene Person als Couch und/oder Sitz nutzbar ist. Im Wesentlichen vertikal bedeutet in diesem Fall, dass das Rückenlehnenteil in einer Ausrichtung angeordnet ist, die es dem Benutzer ermöglicht, sich daran anzulehnen, und dabei eine ergonomische Sitzposition einzunehmen und/oder dass das Rückenlehnenteil einen Winkel zwischen 0° und 20° mit einer Normalen zum horizontal ausgerichteten Liegeteil einschließt. Das Rückenlehnenteil ist dabei oberhalb des Liegeteils angeordnet.

In der zweiten Nutzungsposition ist das Rückenlehnenteil zur Verbreiterung einer Liegefläche des Liegeteils horizontal neben dem Liegeteil und auf gleicher Höhe hierzu angeordnet. Das bedeutet, dass das Rückenlehnenteil aus der im Wesentlichen vertikalen Position der ersten Nutzungsposition oberhalb des Liegeteils, in eine horizontale Position auf gleicher Höhe des Liegeteils bewegt wird. Das Liegeteil und das Rückenlehnenteil grenzen in dieser Position aneinander an, sodass eine verbreiterte Liegefläche für den Nutzer entsteht.

Eine derartig gestaltete Sitz-Liege-Vorrichtung bietet den Vorteil, dass sie in der Couch-Konfiguration (in der ersten Nutzungsposition des Rückenlehnenteils) wenig Raum einnimmt und zudem als ergonomische Sitzfläche, z. B. während kurzer Pausen, genutzt werden kann. In der zweiten Nutzungsposition des Rückenlehnenteils (Bett-Konfiguration) ermöglicht sie dem Benutzer, eine komfortable Schlafposition einzunehmen. Dadurch, dass das Rückenlehnenteil eine Doppelfunktion einnimmt, d. h. wahlweise als Rückenlehne oder als Liegefläche genutzt werden kann, kann die Liegefläche durch einfachen Positionswechsel des Rückenlehnenteils verbreitert werden. Entsprechend kann auf eine komplizierte, ausziehbare oder ausklappbare Ausführung des Liegeteils zur Verbreiterung der Liegefläche verzichtet werden, sodass eine kostengünstige und einfach zu benutzende Sitz-Liege-Vorrichtung entsteht.

Vorzugsweise ist in der ersten Nutzungsposition ein Abstand einer Unterkante des Rückenlehnenteils von einer Oberseite des Liegeteils kleiner ist als 50 cm, weiter vorzugsweise kleiner als 30 cm und/oder kleiner ist als eine Breite des Liegeteils. Unter der Breite des Liegeteils wird dessen in Fahrtrichtung gesehene Abmessung verstanden. Das Liegeteil kann beispielsweise eine Breite zwischen 55 cm und 65 cm aufweisen, was einer typischen Breite einer Liegefläche in einer Nutzfahrzeugkabine entspricht. Das Rückenlehnenteil kann beispielsweise eine Breite zwischen 25 cm und 35 cm aufweisen, sodass die gesamte, verbreiterte Liegefläche eine Breite zwischen 80 cm und 100 cm aufweist, was eine komfortable Schlafposition für den Benutzer ermöglicht. Vorzugsweise weisen sowohl das Rückenlehnenteil als auch das Liegeteil Polster an allen Flächen auf, mit denen der Benutzer in Kontakt kommt, wenn er auf der Sitz-Liege-Vorrichtung sitzt oder liegt.

Gemäß einer weiteren Ausführungsform ist das Rückenlehnenteil in der zweiten Nutzungsposition zwischen einem Fahrersitz der Nutzfahrzeugkabine und einer beifahrerseitigen Seitenwand der Nutzfahrzeugkabine angeordnet. Zusätzlich oder alternativ kann eine Breite der Nutzfahrzeugkabine abzüglich einer Breite des Fahrersitzes größer sein als eine Länge des Rückenlehnenteils. Entsprechend hat das Rückenlehnenteil eine Länge, die dazu geeignet ist, dass das Rückenlehnenteil (aus Sicht einer Vorwärtsfahrtrichtung) neben dem Fahrersitz angeordnet werden kann, d. h. sie passt zwischen die beifahrerseitige Seitenwand der Nutzfahrzeugkabine und den Fahrersitz. Ferner kann das Rückenlehnenteil zwischen der ersten und zweiten Nutzungsposition bewegbar sein, ohne dass der Fahrersitz verstellt werden muss. Das bedeutet, dass der Fahrersitz beim Bewegen des Rückenlehnenteils zwischen der ersten und zweiten Nutzungsposition in seiner normalen Fahrposition verbleiben kann. Ein einfacher und schneller Umbau der Sitz-Liege-Vorrichtung zwischen der Couch-Konfiguration und der Bettkonfiguration wird vorteilhaft ermöglicht.

In einer weiteren Ausführungsform erstreckt sich das Liegeteil von einer beifahrerseitigen Seitenwand der Nutzfahrzeugkabine bis zu einem Bereich hinter einem Fahrersitz, vorzugsweise bis zu einer fahrerseitigen Seitenwand der Nutzfahrzeugkabine. Dies bietet den Vorteil, dass dem Benutzer eine Liegefläche mit möglichst großer Länge zur Verfügung steht. Die Länge der Liegefläche bezieht sich hier auf eine horizontale Richtung senkrecht zur Vorwärtsfahrtrichtung, was in einem (normalen) Bett der Strecke zwischen dem Kopfende und dem Fußende entspricht. Das Liegeteil kann dabei eine größere Länge aufweisen als das Rückenlehnenteil. In diesem Fall kann sich der Benutzer beispielsweise derart auf der Liegefläche positionieren, dass seine Füße am fahrerseitigen Ende der Liegefläche aufliegen, und sein Kopf am beifahrerseitigen Ende. So stehen dem Benutzer vorteilhaft gleichzeitig eine breite Liegefläche im Bereich des Oberkörpers, zum Beispiel zum bequemen Ablegen der Arme, und eine ausreichende Länge der Liegefläche zum Ausstrecken der Beine zur Verfügung.

Alternativ kann eine Länge des Liegeteils im Wesentlichen einer Länge des Rückenlehnenteils entsprechen und die Sitz-Liege-Vorrichtung kann optional ein zweites Liegeteil umfassen, das horizontal hinter dem Fahrersitz und auf gleicher Höhe zum Liegeteil angeordnet ist. Die gesamte verbreiterte Liegefläche besteht in diesem Fall aus mindestens drei Elementen: dem beifahrerseitigen Liegeteil, dem beifahrerseitigen Rückenlehnenteil und dem zweiten Liegeteil, dass hinter dem Fahrersitz angeordnet ist. In der ersten Nutzungsposition bilden die beiden Liegeteile eine Sitz- bzw. Liegefläche und das Rückenlehnenteil eine Rückenlehne aus. In der zweiten Nutzungsposition bilden alle drei Teile eine gemeinsame Liegefläche. Auf diese Weise kann eine flexible, möglichst genau an die Raumbegebenheiten der Nutzfahrzeugkabine angepasste, Sitz-Liege-Vorrichtung geschaffen werden.

Die Nutzfahrzeugkabine umfasst ferner eine Verstelleinrichtung zum Bewegen des Rückenlehnenteils zwischen der ersten und zweiten Nutzungsposition. Dies ermöglicht ein besonders einfaches und wenig fehleranfälliges Bewegen des Rückenlehnenteils zwischen der ersten und der zweiten Nutzungsposition. Die Verstelleinrichtung kann einen Schwenkmechanismus und/oder Handbetätigungsmechanismus aufweisen, um das Rückenlehnenteil zu bewegen.

Die Verstelleinrichtung umfasst mindestens einen Schwenkarm, der jeweils an einem ersten Ende am Rückenlehnenteil befestigt ist und an einem zweiten Ende schwenkbar am Liegeteil oder einer Auflage oder Stützstruktur des Liegeteils befestigt ist. Vorzugsweise umfasst die Verstelleinrichtung zwei Schwenkarme, zum Beispiel je einen an unterschiedlichen Stirnseiten des Rückenlehnenteils. Ein Schwenkarm ist besonders unkompliziert und zuverlässig in der Benutzung und zudem kostengünstig in der Herstellung und Montage. Der/Die Schwenkarm(e) kann/können vorzugsweise stark genug ausgeführt sein, dass das Rückenlehnenteil in der zweiten Nutzungsposition freitragend ist, d. h. nicht auf einer anderen Struktur aufliegen muss, um das Gewicht des Benutzers zu tragen. Anders ausgedrückt kann die Verstelleinrichtung, vorzugsweise der mindestens eine Schwenkarm, gleichzeitig als Tragstruktur dienen, um das Rückenlehnenteil in der zweiten Nutzungsposition frei zu tragen.

Der Schwenkarm ist, zur Höhenverstellung des Rückenlehnenteils in der ersten Nutzungsposition, als Teleskoparm ausgeführt. Dies ermöglicht eine Anpassung der Höhe der Rückenlehne an eine möglichst ergonomische Sitzposition des Benutzers in der ersten Nutzungsposition (Couch-Konfiguration). Insbesondere kann die Höhe der Rückenlehne an die Körpergröße unterschiedlicher Benutzer angepasst werden.

Gemäß einer weiteren Ausführungsvariante kann die Verstelleinrichtung eine Arretiervorrichtung umfassen. Mittels der Arretiervorrichtung kann das Rückenlehnenteil in der ersten Nutzungsposition und/oder in der zweiten Nutzungsposition arretiert werden. Auf diese Weise kann das Rückenlehnenteil gegen ein unbeabsichtigtes Bewegen gesichert werden, was ein verringertes Verletzungsrisiko für den Benutzer zur Folge hat. Die Arretiervorrichtung kann lediglich beispielhaft eine Rastenklemme, einen Sperrbolzen, einen Schnappverschluss o. ä. umfassen, um das Rückenlehnenteil in einer gewünschten Nutzungsposition zu sichern.

In einer weiteren vorteilhaften Ausführungsvariante umfasst die Verstelleinrichtung zwei Schwenkarme. Weiterhin umfasst das Rücklehnenteil einen Polsterträger und ein Polster, das den Polsterträger beidseitig umgibt. Die Schwenkarme sind auf gegenüberliegenden Seiten am Polsterträger befestigt. Der Polsterträger kann beispielsweise ein rahmen-, gitter- und/oder plattenförmiges Trägerteil, z. B. aus Metall, Kunststoff oder Holz umfassen, das in der ersten Nutzungsposition im Wesentlichen vertikal ausgerichtet ist. Das Polster umgibt den Polsterträger beidseitig, d. h., das Polster umfasst einen ersten Teil, der einem auf dem Sitzteil (Liegeteil) sitzenden Benutzer als Rückenpolster zugewandt ist, und einen zweiten Teil, das sich auf derjenigen Seite des Polsterträgers befindet, das von dem sitzenden Benutzer abgewandt ist. Wird das Rückenlehnenteil mittels der Verstelleinrichtung in die zweite Nutzungsposition (Bettkonfiguration) bewegt, befindet sich das zweite Teil auf der oberen Seite, und ist somit Teil der Liegefläche. Die beiden Teile des Polsters können identisch ausgeführt sein, oder der jeweiligen Nutzungskonfiguration angepasst sein, z. B. durch Wahl eines Matratzen- und eines Rückenpolstermaterials.

Da die Schwenkarme der Verstelleinrichtung jeweils an dem Polsterträger angeordnet sind, und das Polster den Polsterträger beidseitig umgibt, besteht immer ein Abstand zwischen den Schwenkarmen und der Fläche des Rückenlehnenteils, mit der der Benutzer in Berührung kommt. Eine Störung des Benutzers durch die Schwenkarme kann entsprechend vermieden werden.

Gemäß einer weiteren Ausführungsform umfasst die Nutzfahrzeugkabine ferner einen Liegeflächenbezug für die Liegeflächen des Liegeteils und Rückenlehnenteils in der zweiten Nutzungsposition. Der Liegeflächenbezug ist auf einer Liegefläche des Rückenlehnenteils, die in der ersten Nutzungsposition einer Rückseite der Nutzfahrzeugkabine zugewandt ist, befestigt. Vorzugsweise ist der Liegeflächenbezug lösbar befestigt. Der Liegeflächenbezug wird vorzugsweise durch das Bewegen des Rückenlehnenteils von der ersten in die zweite Nutzungsposition automatisch auf der Liegefläche des Liegeteils und des Rückenlehnenteils positioniert. Vorteilhaft kann so eine für den Benutzer besonders einfache Möglichkeit bereitgestellt werden, die Sitz-Liege-Vorrichtung mit nur wenigen Arbeitsschritten, vorzugsweise nur einem Arbeitsschritt, von einer Couch-Konfiguration in eine Bettkonfiguration umzugestalten, die dabei automatisch mit einem Bezug bezogen ist/wird.

Der Liegeflächenbezug kann Textilmaterial, beispielsweise ein z. B. atmungsaktives Material umfassen, das typischerweise als Matratzenauflage verwendet wird. Außerdem kann der Liegeflächenbezug eine zusätzliche Polsterung, z. B. einen Gelschaum, umfassen, um die Liegefläche noch komfortabler für den Benutzer zu gestalten. Da der Liegeflächenbezug die Liegefläche nur überspannt, wenn sich das Rückenlehnenteil in der zweiten Nutzungsposition befindet, ist der Liegeflächenbezug in der ersten Nutzungsposition weniger stark beansprucht, wenn der Benutzer die Sitzfläche beispielsweise zum Essen während der Pausen verwendet. Ist der Liegeflächenbezug lösbar befestigt, kann er einfach abgenommen und beispielsweise gewaschen werden.

Gemäß einer Weiterbildung kann eine Kante des Liegeflächenbezugs entlang einer oberen und der Rückseite der Nutzfahrzeugkabine zugewandten Kante des Liegeteils befestigt sein. Eine weitere Kante des Liegeflächenbezugs kann entlang einer in der ersten Nutzungsposition oberen, parallel zur Rückseite der Nutzfahrzeugkabine verlaufenden Kante des Rückenlehnenteils befestigt sein. Diese Befestigung bewirkt beispielhaft, dass beim Bewegen, z. B. verschwenken, des Rückenlehnenteils von der ersten in die zweite Nutzungsposition, der Liegeflächenbezug automatisch auf der Liegefläche positioniert wird.

Gemäß einer weiteren Ausführungsvariante kann die Form und Fläche des Liegeflächenbezugs einer Form und Fläche der verbreiterten Liegefläche entsprechen. Der Liegeflächenbezug überdeckt damit möglichst exakt die gesamte Liegefläche in der zweiten Nutzungsposition. Damit ist vorteilhaft die gesamte Liegefläche von einem durchgängigen Liegeflächenbezug überspannt ohne Falten zu werfen, was eine besonders komfortable Liegefläche erzeugt. In der ersten Nutzungsposition kann zudem eine unnötige Störung des Benutzers durch übermäßig viel Material des Liegeflächenbezugs vermieden werden.

Vorzugsweise ist der Liegeflächenbezug dabei höchstens an Bereichen entlang der äußeren Kanten der Liegefläche befestigt. Der Liegeflächenbezug kann zum Beispiel an zwei gegenüberliegenden Kanten der Liegefläche befestigt sein. Im Bereich zwischen den äußeren Kanten liegt der Liegeflächenbezug lose auf der Liegefläche auf. Auf diese Weise kann sichergestellt werden, dass der Liegeflächenbezug während der Benutzung nicht verrutscht, ermöglicht aber gleichzeitig ein unkompliziertes Umbauen der Sitz-Liege-Vorrichtung zwischen der ersten und der zweiten Nutzungsposition in möglichst wenigen Arbeitsschritten, vorzugsweite einem Arbeitsschritt.

In einer vorteilhaften Weiterbildung ist der Liegeflächenbezug an dem Rückenlehnenteil lösbar befestigt, vorzugsweise mittels eines Klettverschlusses. Zusätzlich oder alternativ ist der Liegeflächenbezug an dem Liegeteil lösbar befestigt, vorzugsweise mittels eines Reißverschlusses. Auf diese Weise kann der Liegeflächenbezug unkompliziert abgenommen und gewartet, z. B. gewaschen oder repariert, werden. Gleichzeitig ist der Liegeflächenbezug während der Benutzung gegen ein ungewolltes Verrutschen gesichert.

Gemäß einer weiteren vorteilhaften Ausführungsform umfasst die Nutzfahrzeugkabine eine plattenförmige und/oder streifenförmige Verlängerung, die am unteren Bereich einer Liegefläche des Rückenlehnenteils angeordnet ist. Die plattenförmige und/oder streifenförmige Verlängerung überdeckt in der zweiten Nutzungsposition des Rückenlehnenteils einen Spalt zwischen dem Liegeteil und dem Rückenlehnenteil. Die Liegefläche besteht in der zweiten Nutzungsposition aus mindestens zwei Teilen (Liegeteil und Rückenlehnenteil) zwischen denen, je nach Gestaltung der Kanten des Liegeteils und des Rückenlehnenteils, z. B. der Kanten der Polster, ein kleiner Spalt entstehen kann. Die Verlängerung ist derart an dem Rückenlehnenteil angeordnet, dass sie, wie das Rückenlehnenteil, in der ersten Nutzungsposition im Wesentlichen vertikal und oberhalb des Liegeteils angeordnet ist. Das heißt, der Benutzer kann auf dem Liegeteil sitzen und sich an dem Rückenlehnenteil anlehnen, ohne von der Verlängerung gestört zu werden. Durch Bewegen des Rückenlehnenteils in die zweite Nutzungsposition wird die Verlängerung zusammen mit dem Rückenlehnenteil in eine horizontale Ausrichtung gebracht. Die Verlängerung ist derart an dem Rückenlehnenteil angeordnet, dass sie in dieser Position den eventuellen Spalt zwischen dem Liegeteil und dem Rückenlehnenteil überdeckt. Die Verlängerung kann plattenförmig und/oder streifenförmig ausgeführt sein. Die Verlängerung kann beispielsweise einen festen Kern, z. B. aus Kunststoff, und eine gepolsterte Ummantelung, z. B. aus einem Schaumstoffmaterial, umfassen. Auf diese Weise wird dem Benutzer eine gleichmäßige Liegefläche zur Verfügung gestellt.

In einer weiteren vorteilhaften Ausführungsform umfasst die Nutzfahrzeugkabine ferner einen Beifahrersitz, dessen Rückenlehne nach vorne in eine im Wesentlichen horizontale Verstaustellung bringbar ist, wobei das Rückenlehnenteil der Sitz-Liege-Vorrichtung in der zweiten Nutzungsposition oberhalb und bevorzugt beanstandet zur Rückenlehne des Beifahrersitzes in der Verstaustellung angeordnet ist. Auf diese Weise kann der in der Nutzfahrzeugkabine verfügbare Raum möglichst effizient genutzt werden. Ist die Rückenlehne so gestaltet, dass sie in der zweiten Nutzungsposition beabstandet von der Rückenlehne des Beifahrersitzes angeordnet, also freitragend ist, kann der Beifahrersitz einer beliebigen Ausführung entsprechend, solange er eine nach vorne bringbare, z. B. umklappbare, Rückenlehne umfasst, was die Flexibilität zur Gestaltung der Nutzfahrzeugkabine weiter vergrößert.

Gemäß einem weiteren allgemeinen Gesichtspunkt der vorliegenden Offenbarung wird ein Nutzfahrzeug, aufweisend eine Nutzfahrzeugkabine wie hierin beschrieben, bereitgestellt. Mit anderen Worten sollen die in diesem Dokument im Zusammenhang mit der Nutzfahrzeugkabine an sich beschriebenen Merkmale auch im Zusammenhang mit dem Nutzfahrzeug offenbart und beanspruchbar sein. Hierbei kann unter einem Nutzfahrzeug im Allgemeinen ein Fahrzeug verstanden werden, das durch seine Bauart und Einrichtung speziell zur Beförderung von Personen, zum Transport von Gütern oder zum Ziehen von Anhängerfahrzeugen ausgelegt ist. Bevorzugt ist das Nutzfahrzeug ein Lastkraftwagen. In einem Nutzfahrzeug verbringen Benutzer typischerweise viel Zeit, sodass eine Nutzfahrzeugkabine umfassend eine Sitz-Liege-Vorrichtung wie zuvor beschrieben besonders vorteilhaft ist.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figuren 1a - 1d: eine schematische Illustration einer Nutzfahrzeugkabine mit einer Sitz-Liege-Vorrichtung gemäß einer Ausführungsform;
- Figuren 2a - 2c: eine schematische Illustration einer Sitz-Liege-Vorrichtung mit einem Liegeflächenbezug gemäß einer weiteren Ausführungsform; und
- Figur 3: eine schematische Darstellung eines Kraftfahrzeugs mit einer Nutzfahrzeugkabine gemäß einer weiteren Ausführungsform der Erfindung.

Die in den Figuren gezeigten Ausführungsformen stimmen zumindest teilweise überein, sodass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

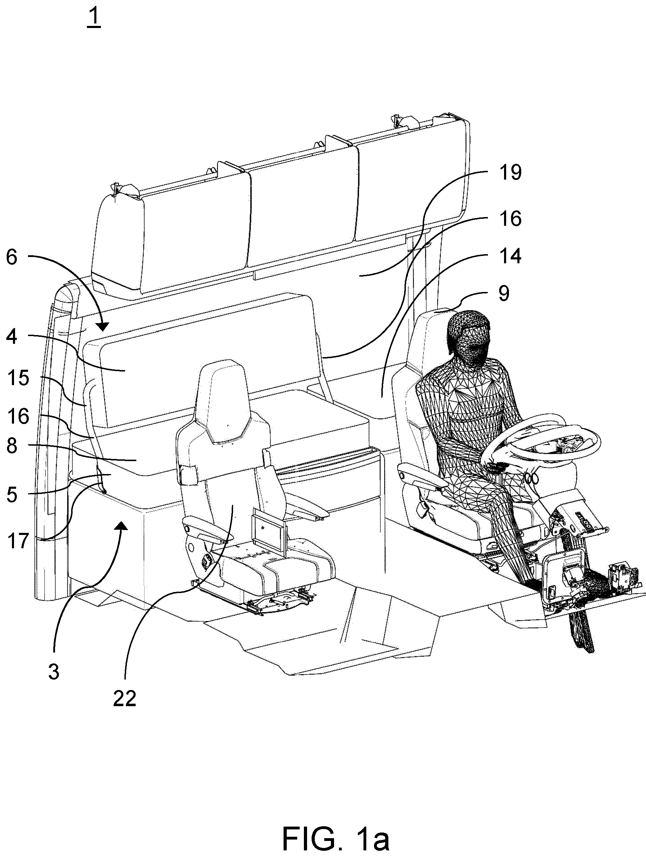

Figur 1a zeigt eine schematische Darstellung einer Nutzfahrzeugkabine 1. Fahrer eines Nutzfahrzeugs verbringen insbesondere bei Fahrten auf langen Strecken viel Zeit in der Nutzfahrzeugkabine 1 des Nutzfahrzeugs. Um den Fahrer während des Aufenthalts in der Nutzfahrzeugkabine 1 optimal zu unterstützen, können in der Nutzfahrzeugkabine 1 zusätzliche Einrichtungen angeordnet sein, die nicht vorrangig der Steuerung des Nutzfahrzeugs dienen, sondern beispielsweise der Entspannung während der Pausenzeiten des Fahrers.

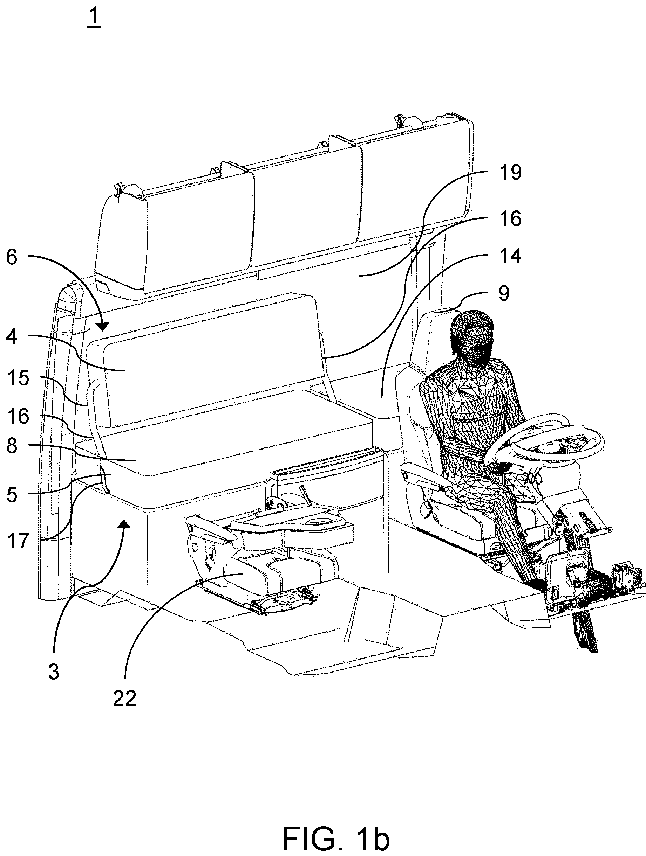

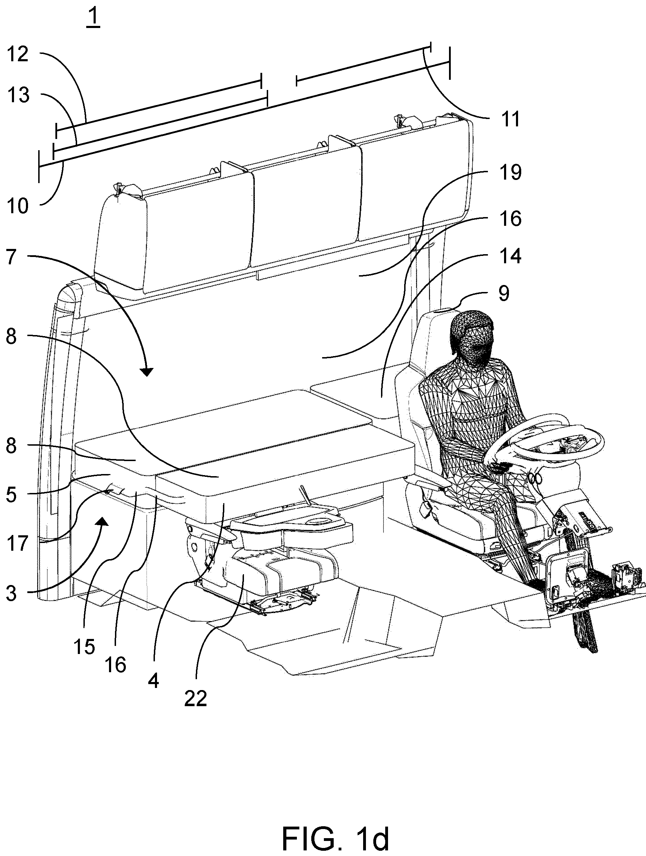

Dazu ist in der in Figur 1a dargestellten Nutzfahrzeugkabine 1 hinter einem Fahrersitz 9 und einem (optionalen) Beifahrersitz 22 eine Sitz-Liege-Vorrichtung 3 angeordnet. Die Sitz-Liege-Vorrichtung 3 zeichnet sich dadurch aus, dass sie sowohl in einer Couch-Konfiguration als auch in einer Bettkonfiguration verwendet werden kann. In der Figur 1a ist die Sitz-Liege-Vorrichtung 3 in der Couch-Konfiguration gezeigt. Die folgenden Figuren 1b bis 1c illustrieren den Umbau der Sitz-Liege-Vorrichtung in die Bett-Konfiguration. In der Figur 1d ist die Sitz-Liege-Vorrichtung 3 schließlich in der Bett-Konfiguration zu sehen.

In der Figur 1a ist zu sehen, dass die Sitz-Liege-Vorrichtung 3 ein Rückenlehnenteil 4 und ein horizontal ausgerichtetes Liegeteil 5 umfasst. Das Liegeteil 5 kann auch als Sitzteil bezeichnet werden. Das Liegeteil 5 ist im hinteren Bereich der Nutzfahrzeugkabine 1 angeordnet und verläuft vorzugsweise entlang einer Rückseite 19 der Nutzfahrzeugkabine 1. Sowohl das Liegeteil 5 als auch das Rückenlehnenteil 4 können Polster zur komfortablen Nutzung durch den Benutzer aufweisen.

In der Couch-Konfiguration ist das Rückenlehnenteil 4 in einer ersten Nutzungsposition 6 angeordnet. Der Benutzer kann auf einer Liegefläche 8 bzw. Sitzfläche des Liegeteils 5 platznehmen, und sich bequem an dem Rückenlehnenteil 4 anlehnen. Dazu ist das Rückenlehnenteil 4 in der ersten Nutzungsposition 6 im Wesentlichen vertikal und beabstandet zum Liegeteil 5 ausgerichtet. Im Wesentlichen vertikal bedeutet in diesem Fall, dass sich der Benutzer in einer ergonomischen Sitzposition an dem Rückenlehnenteil 4 anlehnen kann. Anders ausgedrückt bedeutet im Wesentlichen vertikal, dass das Rückenlehnenteil 4 einen Winkel zwischen 0° und 20° mit einer Normalen zum horizontal ausgerichteten Liegefläche 8 des Liegeteils 5 einschließt. Anders ausgedrückt kann als Rückenlehnenteil 4 einen Winkel zwischen 90° und 110° zur Liegefläche 8 des Liegeteils 5 einnehmen. Der Abstand zwischen der Unterkante des Rückenlehnenteils 4 von der Oberseite des Liegeteils 5 ist bevorzugt kleiner als 50 cm, besonders bevorzugt kleiner als 30 cm und/oder kleiner als eine Breite des Liegeteils 5. Die Breite des Liegeteils ist dessen Abmessung in Fahrtrichtung gesehen.

Um das Rückenlehnenteil 4 in eine zweite Nutzungsposition zu bewegen, die der Bett-Konfiguration der Sitz-Liege-Vorrichtung 3 entspricht, weist die Sitz-Liege-Vorrichtung 3 eine Verstelleinrichtung 15 auf. Im in der Figur 1a dargestellten Beispiel umfasst die Verstelleinrichtung 15 beispielhaft zwei Schwenkarme 16, die jeweils an einem ersten Ende, hier dem oberen Ende, am Rückenlehnenteil 4 befestigt ist, und an einem zweiten Ende, hier dem unteren Ende, am Liegeteil 5 befestigt ist. Die Verstelleinrichtung 15 kann eine Arretiervorrichtung 17 umfassen, sodass das Rückenlehnenteil 4 in der ersten Nutzungsposition 6 arretiert und damit gegen ein versehentliches Verstellen gesichert werden kann. Die Arretiervorrichtung 17 kann beispielsweise durch eine Klemmvorrichtung oder durch einen Sicherungsstift ausgebildet sein. Die Schwenkarme sind als Teleskoparme ausgeführt, sodass das Rückenlehnenteil 4 in der Höhe verstellbar ist, und damit an die Körpergröße unterschiedlicher Benutzer angepasst werden kann. Zwischen den Schwenkarmen 16 kann das Rückenlehnenteil 4 einen (nicht dargestellten) z. B. plattenförmigen Polsterträger, etwa aus Metall, Kunststoff oder Holz, umfassen, an denen die beiden Schwenkarme 16 rechts und links befestigt sind. Ein Polster kann den Polsterträger beidseitig umgeben, sodass der Benutzer sich in der Couch-Konfiguration daran anlehnen und in der Bett-Konfiguration darauf liegen kann.

Eine (nicht dargestellte) Ausführung, in der die Verstelleinrichtung 15 nur einen Schwenkarm 16 oder mehr als zwei Schwenkarme 16 aufweist, ist ebenso möglich. Ebenso könnten die Schwenkarme an einer Auflage oder einer Stützstruktur des Liegeteils 5 befestigt sein, oder die Verstelleinrichtung 15 könnte durch andere Verstellmechanismen, zum Beispiel durch eine Schienen- oder Seilanordnung, ausgebildet sein.

In der ersten Nutzungsposition 6 dient die Sitz-Liege-Vorrichtung 3 dem Benutzer vornehmlich dazu darauf sitzen, zum Beispiel beim Essen während einer kurzen Pause. Um darauf ergonomisch bequem liegen zu können, kann die Sitz-Liege-Vorrichtung 3 in eine Bettkonfiguration umgebaut werden, indem das Rückenlehnenteil 4 in eine zweite Nutzungskonfiguration bewegt wird, was in den folgenden Figuren 1b bis 1c illustriert ist.

In der Figur 1b wird dazu in einem optionalen Schritt zuerst eine Rückenlehne des Beifahrersitzes 22 nach vorne in eine im Wesentlichen horizontale Verstaustellung gebracht. Derartige Beifahrersitze 22 sind im Stand der Technik in diversen Ausführungen verfügbar und sollen hier daher als bekannt vorausgesetzt werden.

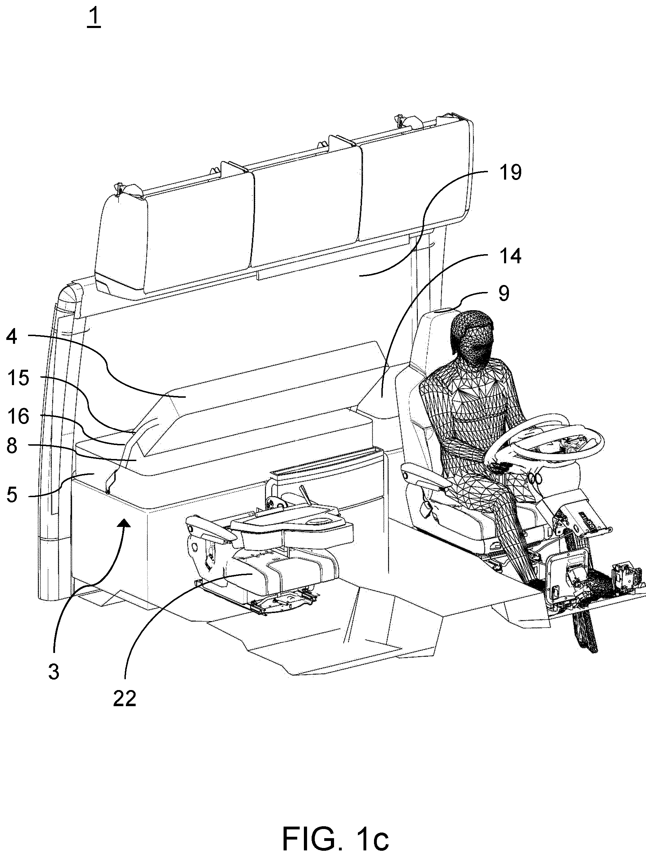

Im nächsten Schritt wird in Figur 1c das Rückenlehnenteil 4, zum Beispiel mittels der Verstelleinrichtung 15, nach vorne bewegt. Die Bewegung kann beispielsweise per Muskelkraft, motorisiert oder mittels einer hydraulischen Unterstützung erfolgen.

In Figur 1d befindet sich das Rückenlehnenteil 4 schließlich in einer zweiten Nutzungsposition 7, in der das Rückenlehnenteil 4 zur Verbreiterung der Liegefläche 8 des Liegeteils horizontal neben dem Liegeteil 5 und auf gleicher Höhe hierzu angeordnet ist. Das Rückenlehnenteil 5 und das Liegeteil 4 bilden eine gemeinsame Liegefläche 8 aus. Am in der ersten Nutzungsposition unteren Bereich der Liegefläche 8 des Rückenlehnenteils 4 kann eine (nicht dargestellte) plattenförmige und/oder streifenförmige Verlängerung angeordnet sein, die in der zweiten Nutzungsposition 7 des Rückenlehnenteils 4 einen eventuellen Spalt zwischen dem Liegeteil 5 und dem Rückenlehnenteil 4 überdeckt. Auf diese Weise kann die Liegefläche noch gleichmäßiger gestaltet werden.

Dem Benutzer steht in der entstandenen Bett-Konfiguration der Sitz-Liege-Vorrichtung 3 ein für Nutzfahrzeugkabinenverhältnisse breites Bett, beispielsweise für die Nachtruhe, zur Verfügung. Im in der Figur 1d gezeigten Beispiel befindet sich das Rückenlehnenteil 4 in der zweiten Nutzungsposition 7 oberhalb des zuvor nach vorne geklappten Beifahrersitzes 22, und bevorzugt beabstandet davon, sodass das Rückenlehnenteil 4 freitragend ist, und keinen Kontakt mit dem Beifahrersitz 22 benötigt. Mittels der (optionalen) Arretiervorrichtung 17 kann das Rückenlehnenteil 4 in der zweiten Nutzungsposition 7 gegen ein unbeabsichtigtes Bewegen gesichert werden.

Das Rückenlehnenteil 4 kann in der zweiten Nutzungsposition 7 beispielsweise zwischen dem Fahrersitz 9 und einer beifahrerseitigen Seitenwand der Nutzfahrzeugkabine 1 angeordnet sein. Dabei kann eine Breite 10 der Nutzfahrzeugkabine 1 abzüglich einer Breite 11 des Fahrersitzes 9 größer sein, als die Länge 12 des Rückenlehnenteils 4. Vorzugsweise kann das Rückenlehnenteil 4 in die zweite Nutzungsposition 7 bewegt werden, ohne dass der Fahrersitz 9 verstellt werden muss. Dies bietet zum einen den Vorteil, dass der Benutzer die Sitz-Liege-Vorrichtung 3 besonders unkompliziert, vorzugsweise in nur einem Schritt, zwischen einer Couch-Konfiguration und einer Bettkonfiguration wechseln kann. Zudem bleibt der Fahrersitz 9 die ganze Zeit über zugänglich und benutzbar, sodass der Fahrer, zum Beispiel aufgrund einer Gefahrensituation, sofort auf dem Fahrersitz platznehmen kann, ohne zuerst einen Umbau der Sitz-Liege-Vorrichtung 3 vornehmen zu müssen.

Das Liegeteil 5 kann sich (abweichend von der Darstellung der Figur 1d) von einer beifahrerseitigen Seitenwand der Nutzfahrzeugkabine 1 bis zu einem Bereich hinter dem Fahrersitz 9 erstrecken, vorzugsweise bis zu einer fahrerseitigen Seitenwand der Nutzfahrzeugkabine. Alternativ kann (entsprechend der Darstellung der Figur 1d) eine Länge 13 des Liegeteils 5 im Wesentlichen der Länge 12 des Rückenlehnenteils 4 entsprechen. In diesem Fall kann die Sitz-Liege-Vorrichtung 3 ein zweites Liegeteil 14 umfassen, das horizontal hinter dem Fahrersitz 9 und auf gleicher Höhe zum Liegeteil 5 angeordnet ist. Das zweite Liegeteil 14 grenzt an das Liegeteil 5 an, sodass das Liegeteil 5, das Rückenlehnenteil und das zweite Liegeteil 14 in der zweiten Nutzungsposition 7 eine gemeinsame Liegefläche 8 ausbilden.

In der bevorzugten Nutzungsweise liegt der Benutzer derart auf der Liegefläche 8, dass seine Füße auf der Fahrerseite, hier auf dem zweiten Liegeteil 14, und sein Kopf auf der Beifahrerseite positioniert werden. Die Länge der Liegefläche entspricht im Wesentlichen der Breite 10 der Nutzfahrzeugkabine 1 und ist ausreichend groß, sodass der Benutzer sich darauf ausstrecken kann. Im Bereich des Oberkörpers ist die Liegefläche 8 verbreitert, sodass der Benutzer genügend Platz hat, um sich darauf zu bewegen und seine Arme bequem ablegen zu können.

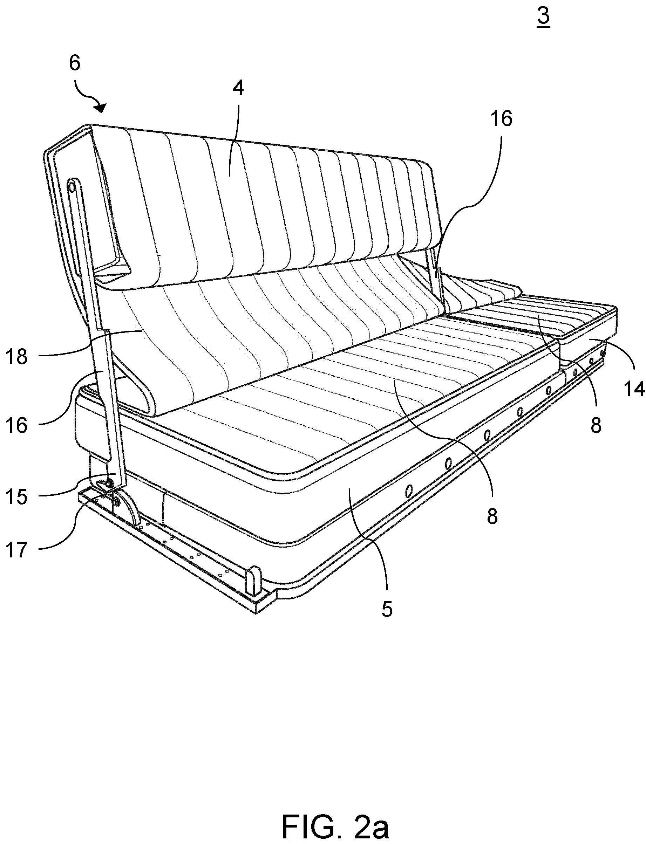

Die Figuren 2a bis 2c zeigen eine weitere Illustration einer Sitz-Liege-Vorrichtung 3 gemäß einer weiteren Ausführungsform der Erfindung, dieses Mal ohne eine Nutzfahrzeugkabine.

Wie zuvor ist in der Figur 2a zu sehen, dass die Sitz-Liege-Vorrichtung 3 ein Liegeteil 5 und ein Rückenlehnenteil 4 umfasst. Das Rückenlehnenteil 4 befindet sich in der ersten Nutzungsposition 6 und die Sitz-Liege-Vorrichtung 3 damit in der Couch-Konfiguration, in der sich der Benutzer beispielsweise auf die Liegefläche 8 des Liegeteils 5 setzen, und dabei an der Rückenlehne des Rückenlehnenteils 4 anlehnen kann. Lediglich beispielhaft umfasst die Sitz-Liege-Vorrichtung 3 ein zweites Liegeteil 14 und eine zwei Schwenkarme 16 und eine Arretiervorrichtung 17 umfassende Verstelleinrichtung 15.

Im Unterschied zu den Figuren 1a bis 1d umfasst die Sitz-Liege-Vorrichtung 3 in den Figuren 2a bis 2c zusätzlich einen Liegeflächenbezug 18 für die Liegeflächen 8 des Liegeteils 5 und des Rückenlehnenteils 4 in der zweiten Nutzungsposition.

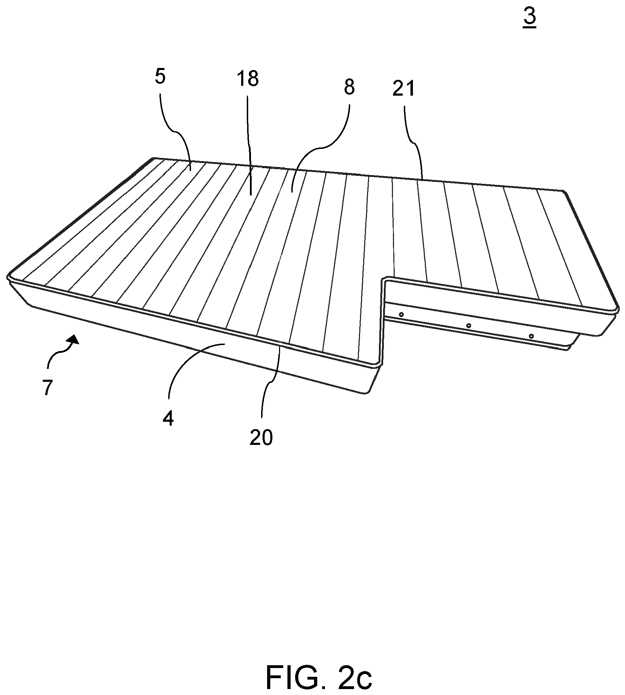

Der Liegeflächenbezug 18 ist derart an dem Rückenlehnenteil 4 und dem Liegeteil 5 befestigt, vorzugsweise lösbar befestigt, dass der Liegeflächenbezug 18 automatisch auf der Liegefläche 8 des Liegeteils 5 und des Rückenlehnenteils 4 positioniert wird, sobald das Rückenlehnenteil 4 von der ersten Nutzungsposition 6 in die zweite Nutzungsposition (dargestellt in der Figur 2c) bewegt wird.

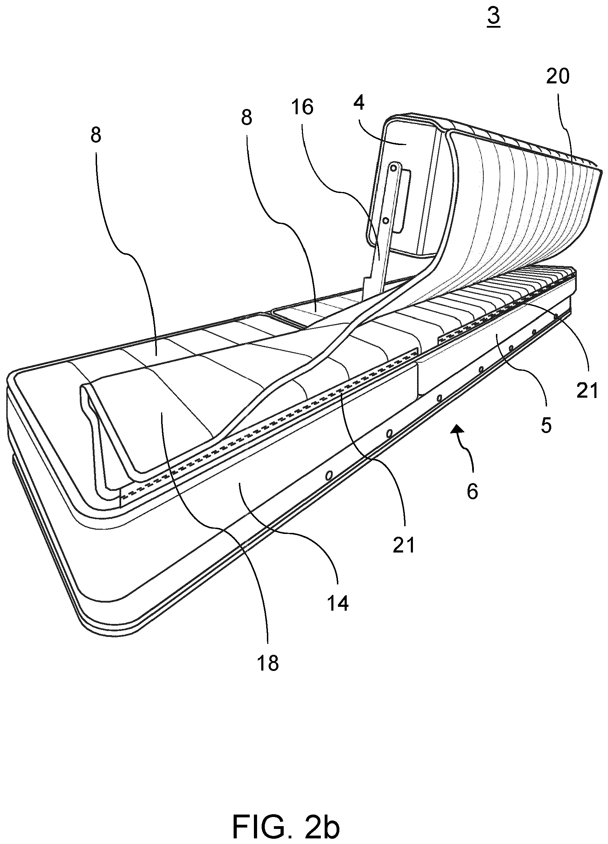

In der Figur 2b ist zu erkennen, dass der Liegeflächenbezug 18 an einer in der ersten Nutzungsposition 6 oberen, der Rückwand der Nutzfahrzeugkabine zugewandten Seite des Rückenlehnenteils 4 befestigt ist. Beispielhaft ist eine Kante des Liegeflächenbezugs 18 entlang einer in der ersten Nutzungsposition 6 oberen, parallel zur Rückseite der Nutzfahrzeugkabine verlaufenden Kante des Rückenlehnenteils befestig, zum Beispiel mittels eines Klettverschlusses 20. Eine gegenüberliegende Kante des Liegeflächenbezuges ist, z. B. mittels eines Reißverschlusses 21, entlang einer oberen und der Rückseite des Nutzfahrzeugs zugewandten Kante des Liegeteils 5 befestigt. Sowohl die Verbindung mittels Klettverschluss 20, als auch die Verbindung mittels Reißverschluss 21 können unkompliziert gelöst werden, sodass der Liegeflächenbezug 18 abgenommen und zum Beispiel gewaschen werden kann.

Durch die Befestigung des Liegeflächenbezugs 18 an den Kanten des Liegeteils 5 und des Rückenlehnenteils 4, die in der ersten Nutzungsposition 6 jeweils der Rückseite der Nutzfahrzeugkabine zugewandt sind, wird der Liegeflächenbezug 18 automatisch auf der Liegefläche 8 positioniert, sobald das Rückenlehnenteil 4 in die zweite Nutzungsposition bewegt wird.

Entsprechen zeigt Figur 2c die Sitz-Liege-Vorrichtung 3 mit dem Rückenlehnenteil 4 in der zweiten Nutzungsposition 7. Der Liegeflächenbezug 18 überspannt die gesamte Liegefläche 8 vollständig und ohne Falten zu werfen. Bevorzugt entspricht die Form und Fläche des Liegeflächenbezugs 18 gerade der Form und Fläche der durch das Rückenlehnenteil 4 und das Liegeteil 5 gebildeten verbreiterten Liegefläche 8. Im Beispiel der Figur 2c weist der Liegeflächenbezug 18 entsprechend einen Ausschnitt für einen Fahrersitz und damit eine nicht-rechteckige Form auf.

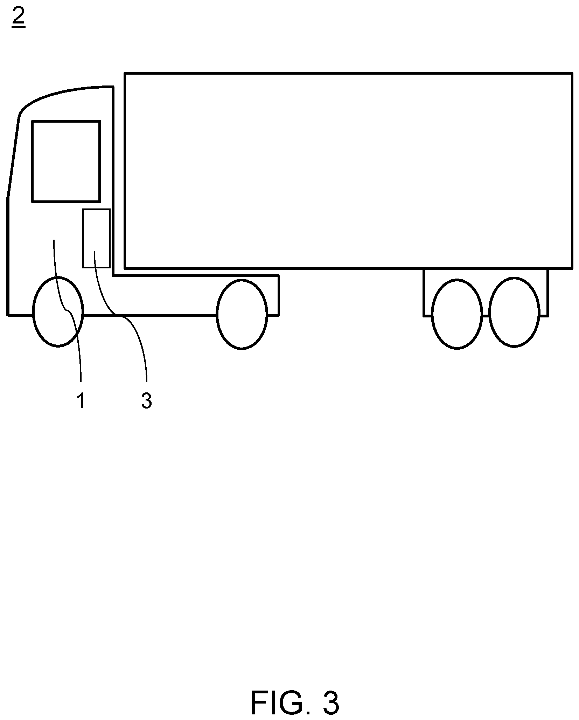

Figur 3 zeigt eine schematische Darstellung eines Nutzfahrzeugs 2 mit einer Nutzfahrzeugkabine 1, umfassend eine Sitz-Liege-Vorrichtung 3 gemäß einer Ausführungsform der Erfindung. Es versteht sich, dass die unter Bezugnahme auf die Figur 3 beschriebenen Techniken und Merkmale mit den Techniken und Merkmalen, die unter Bezugnahme auf die Figuren 1 und 2 beschrieben sind, kombinierbar sind, einzeln oder in jeglicher Kombination. Das Nutzfahrzeug 2 kann - wie beispielhaft dargestellt - als Lastkraftwagen ausgeführt sein.

Obwohl die Erfindung unter Bezugnahme auf bestimmte Ausführungsbeispiele beschrieben worden ist, ist es für einen Fachmann ersichtlich, dass verschiedene Änderungen ausgeführt werden können soweit diese in den Bereich der beigefügten Patentansprüche fallen.

### Bezugszeichenliste

- 1: Nutzfahrzeugkabine
- 2: Lastkraftwagen/Nutzfahrzeug
- 3: Sitz-Liege-Vorrichtung
- 4: Rückenlehnenteil
- 5: Liegeteil
- 6: Erste Nutzungsposition
- 7: Zweite Nutzungsposition
- 8: Liegefläche
- 9: Fahrersitz
- 10: Breite der Nutzfahrzeugkabine
- 11: Breite des Fahrersitzes
- 12: Länge des Rückenlehnenteils
- 13: Länge des Liegeteils
- 14: Zweites Liegeteil
- 15: Verstelleinrichtung
- 16: Schwenkarm
- 17: Arretiervorrichtung
- 18: Liegeflächenbezug
- 19: Rückseite der Nutzfahrzeugkabine
- 20: Klettverschluss
- 21: Reißverschluss
- 22: Beifahrersitz

## Patentansprüche

1. Nutzfahrzeugkabine (1), vorzugsweise Fahrerhaus eines Lastkraftwagens (2), umfassend
eine Sitz-Liege-Vorrichtung (3), die in einem hinteren Bereich der Nutzfahrzeugkabine (1) angeordnet ist, ein Rückenlehnenteil (4) und ein horizontal ausgerichtetes Liegeteil (5) aufweist,
wobei das Rückenlehnenteil (4) zwischen einer ersten (6) und einer zweiten Nutzungsposition (7) bewegbar ist, vorzugsweise um wahlweise eine Couch-Konfiguration oder eine Bettkonfiguration der Sitz-Liege-Vorrichtung einzustellen,
wobei das Rückenlehnenteil (4) in der ersten Nutzungsposition (6) im Wesentlichen vertikal und derart beabstandet zum Liegeteil (5) angeordnet ist, dass das Rückenlehnenteil (4) als Rücklehne und das Liegeteil (5) als Sitzteil für einen Benutzer der Sitz-Liege-Vorrichtung (3) nutzbar ist; und
wobei das Rückenlehnenteil (4) in der zweiten Nutzungsposition (7) zur Verbreiterung einer Liegefläche (8) des Liegeteils (5) horizontal neben dem Liegeteil (5) und auf gleicher Höhe hierzu angeordnet ist; und
ferner umfassend eine Verstelleinrichtung (15) zum Bewegen des Rückenlehnenteils (4) zwischen der ersten (6) und zweiten (7) Nutzungsposition;
wobei die Verstelleinrichtung (15) mindestens einen Schwenkarm (16), vorzugsweise zwei Schwenkarme (16), umfasst, der jeweils an einem ersten Ende am Rückenlehnenteil (4) befestigt ist und an einem zweiten Ende schwenkbar am Liegeteil (5) oder einer Auflage oder Stützstruktur des Liegeteils (5) befestigt ist;
**dadurch gekennzeichnet, dass**
zur Höhenverstellung des Rückenlehnenteils (4) in der ersten Nutzungsposition (6) der Schwenkarm (16) als Teleskoparm ausgeführt ist.

2. Nutzfahrzeugkabine (1) nach Anspruch 1, wobei
das Rückenlehnenteil (4) in der zweiten Nutzungsposition (7) zwischen einem Fahrersitz (9) der Nutzfahrzeugkabine (1) und einer beifahrerseitigen Seitenwand der Nutzfahrzeugkabine (1) angeordnet ist; und/oder
eine Breite (10) der Nutzfahrzeugkabine (1) abzüglich einer Breite (11) des Fahrersitzes (9) größer ist als eine Länge (12) des Rückenlehnenteils (4); und/oder
das Rückenlehnenteil (4) zwischen der ersten (6) und zweiten (7) Nutzungsposition bewegbar ist, ohne dass der Fahrersitz (9) verstellt werden muss.

3. Nutzfahrzeugkabine (1) nach einem der vorherigen Ansprüchen, wobei
das Liegeteil (5) sich von einer beifahrerseitigen Seitenwand der Nutzfahrzeugkabine (1) bis zu einem Bereich hinter einem Fahrersitz (9) erstreckt, vorzugsweise bis zu einer fahrerseitigen Seitenwand der Nutzfahrzeugkabine (1); oder
eine Länge (13) des Liegeteils (5) im Wesentlichen einer Länge (12) des Rückenlehnenteils (4) entspricht und die Sitz-Liege-Vorrichtung (3) ein zweites Liegeteil (14) umfasst, das horizontal hinter dem Fahrersitz (9) und auf gleicher Höhe zum Liegeteil (5) angeordnet ist.

4. Nutzfahrzeugkabine (1) nach einem der vorherigen Ansprüche, wobei
die Verstelleinrichtung (15) eine Arretiervorrichtung (17) umfasst zur Arretierung des Rückenlehnenteils (4) in der ersten Nutzungsposition (6) und/oder in der zweiten Nutzungsposition (7).

5. Nutzfahrzeugkabine (1) nach einem der vorherigen Ansprüche, wobei
die Verstelleinrichtung (15) zwei Schwenkarme (16) umfasst, und
das Rücklehnenteil (4) einen Polsterträger und ein Polster umfasst, das den Polsterträger beidseitig umgibt, und die Schwenkarme (16) auf gegenüberliegenden Seiten am Polsterträger befestigt sind.

6. Nutzfahrzeugkabine nach einem der vorherigen Ansprüche, ferner umfassend
einen Liegeflächenbezug (18) für die Liegeflächen (8) des Liegeteils (5) und Rückenlehnenteils (4) in der zweiten Nutzungsposition (7), der auf einer Liegefläche (8) des Rückenlehnenteils (4), die in der ersten Nutzungsposition (6) einer Rückseite (19) der Nutzfahrzeugkabine (1) zugewandt ist, befestigt ist, vorzugsweise lösbar befestigt ist, und der durch das Bewegen des Rückenlehnenteils (4) von der ersten (6) in die zweite (7) Nutzungsposition automatisch auf der Liegefläche (8) des Liegeteils (5) und des Rückenlehnenteils (4) positioniert wird.

7. Nutzfahrzeugkabine nach Anspruch 6, wobei
eine Kante des Liegeflächenbezugs (18) entlang einer oberen und der Rückseite (19) der Nutzfahrzeugkabine (1) zugewandten Kante des Liegeteils (5) befestigt ist, und eine weitere Kante des Liegeflächenbezugs (18) entlang einer in der ersten Nutzungsposition (6) oberen, parallel zur Rückseite (19) der Nutzfahrzeugkabine (1) verlaufenden Kante des Rückenlehnteils (4) befestigt ist, und/oder
die Form und Fläche des Liegeflächenbezugs (18) einer Form und Fläche der verbreiterten Liegefläche (8) entspricht.

8. Nutzfahrzeugkabine (1) nach Anspruch 6 oder 7, wobei
der Liegeflächenbezug (18) an dem Rückenlehnenteil (4) lösbar befestigt ist, vorzugsweise mittels eines Klettverschlusses (20), und/oder
der Liegeflächenbezug (18) an dem Liegeteil (5) lösbar befestigt ist, vorzugsweise mittels eines Reißverschlusses (21).

9. Nutzfahrzeugkabine (1) nach einem der vorherigen Ansprüche, ferner umfassend
eine plattenförmige und/oder streifenförmige Verlängerung, die am unteren Bereich einer Liegefläche (8) des Rückenlehnenteils (4) angeordnet ist und in der zweiten Nutzungsposition (7) des Rückenlehnenteils (4) einen Spalt zwischen dem Liegeteil (5) und dem Rückenlehnenteil (4) überdeckt.

10. Nutzfahrzeugkabine (1) nach einem der vorherigen Ansprüche, ferner umfassend
einen Beifahrersitz (22), dessen Rückenlehne nach vorne in eine im Wesentlichen horizontale Verstaustellung bringbar ist, wobei das Rückenlehnenteil (4) der Sitz-Liege-Vorrichtung (3) in der zweiten Nutzungsposition (7) oberhalb und bevorzugt beanstandet zur Rückenlehne des Beifahrersitzes (22) in der Verstaustellung angeordnet ist.

11. Nutzfahrzeugkabine (1) nach einem der vorherigen Ansprüche,
wobei in der ersten Nutzungsposition (6) ein Abstand einer Unterkante des Rückenlehnenteils (4) von einer Oberseite des Liegeteils (5) kleiner ist als 50 cm, weiter vorzugsweise kleiner als 30 cm und/oder kleiner ist als eine Breite des Liegeteils (5).

12. Nutzfahrzeug (2), vorzugsweise Lastkraftwagen (2), umfassend eine Nutzfahrzeugkabine (1) nach einem der vorherigen Ansprüche.

## Claims

1. A commercial vehicle cab (1), preferably the cab of a truck (2), comprising
a seat-berth arrangement (3) arranged in a rear portion of the commercial vehicle cab (1), comprising a backrest part (4) and a horizontally orientated berth part (5)
wherein the backrest part (4) is movable between a first (6) and a second position of use (7), preferably in order to selectively set a couch configuration or a bed configuration of the seat-berth arrangement,
wherein the backrest part (4) in the first position of use (6) is arranged substantially vertically and at such a distance from the berth part (5) that the backrest part (4) can be used as a backrest and the berth part (5) as a seat part for a user of the seat-berth arrangement (3); and
wherein, in the second position of use (7), the backrest portion (4) is arranged horizontally next to the berth portion (5) and at the same height as the latter in order to widen a lying surface (8) of the berth portion (5); and
further comprising an adjusting device (15) for moving the backrest part (4) between the first (6) and second (7) position of use;
wherein the adjusting device (15) comprises at least one pivot arm (16), preferably two pivot arms (16), which is fastened at a first end to the backrest part (4) and is pivotably fastened at a second end to the berth part (5) or a support or supporting structure of the berth part (5);
**characterised in that**
the pivot arm (16) is configured as a telescopic arm for adjusting the height of the backrest part (4) in the first position of use (6).

2. Commercial vehicle cab (1) according to claim 1, wherein
the backrest part (4) in the second position of use (7) is arranged between a driver's seat (9) of the commercial vehicle cab (1) and a passenger-side side wall of the commercial vehicle cab (1); and/or
a width (10) of the commercial vehicle cab (1) minus a width (11) of the driver's seat (9) is greater than a length (12) of the backrest part (4); and/or
the backrest part (4) can be moved between the first (6) and second (7) position of use without the driver's seat (9) having to be adjusted.

3. Commercial vehicle cab (1) according to one of the previous claims, wherein
the berth part (5) extends from a passenger-side side wall of the commercial vehicle cab (1) to a portion behind a driver's seat (9), preferably to a driver-side side wall of the commercial vehicle cab (1); or
a length (13) of the berth part (5) substantially corresponds to a length (12) of the backrest part (4) and the seat-berth arrangement (3) comprises a second berth part (14) which is arranged horizontally behind the driver's seat (9) and at the same height as the berth part (5).

4. Commercial vehicle cab (1) according to one of the previous claims, wherein
the adjusting device (15) comprises a locking device (17) for locking the backrest part (4) in the first position of use (6) and/or in the second position of use (7).

5. Commercial vehicle cab (1) according to one of the previous claims, wherein
the adjusting device (15) comprises two pivot arms (16), and
the backrest part (4) comprises an upholstery support and an upholstery which surrounds the upholstery support on both sides, and the pivot arms (16) are fastened to the upholstery support on opposite sides.

6. A commercial vehicle cab according to any one of the preceding claims, further comprising
a lying-surface cover (18) for the lying surfaces (8) of the berth part (5) and backrest part (4) in the second position of use (7), which is attached, preferably detachably, to a lying surface (8) of the backrest part (4), which in the first position of use (6) faces a rear side (19) of the commercial vehicle cab (1), and which is automatically positioned on the lying surface (8) of the berth part (5) and the backrest part (4) by moving the backrest part (4) from the first (6) to the second (7) position of use.

7. Commercial vehicle cab according to claim 6, wherein
an edge of the lying-surface cover (18) is fastened along an upper edge of the berth part (5) facing the rear (19) of the commercial vehicle cab (1), and a further edge of the lying-surface cover (18) is fastened along an upper edge of the backrest part (4) running parallel to the rear (19) of the commercial vehicle cab (1) in the first position of use (6), and/or
the shape and area of the lying-surface cover (18) corresponds to a shape and area of the widened lying surface (8).

8. Commercial vehicle cab (1) according to claim 6 or 7, wherein
the lying-surface cover (18) is detachably fastened to the backrest part (4), preferably by means of a hook-and-loop fastener (20), and/or
the lying-surface cover (18) is detachably fastened to the berth part (5), preferably by means of a zip fastener (21).

9. Commercial vehicle cab (1) according to one of the previous claims, further comprising
a plate-shaped and/or strip-shaped extension arranged on the lower portion of a lying surface (8) of the backrest part (4) and covering a gap between the lying part (5) and the backrest part (4) in the second position of use (7) of the backrest part (4).

10. A commercial vehicle cab (1) according to any of the previous claims, further comprising
a passenger seat (22), the backrest of which can be brought forwards into a substantially horizontal stowed position, wherein the backrest part (4) of the seat-berth arrangement (3) in the second position of use (7) is arranged above and preferably at an angle to the backrest of the passenger seat (22) in the stowed position.

11. Commercial vehicle cab (1) according to one of the previous claims,
wherein, in the first position of use (6), a distance of a lower edge of the backrest part (4) from an upper side of the berth part (5) is smaller than 50 cm, further preferably smaller than 30 cm and/or smaller than a width of the berth part (5).

12. Commercial vehicle (2), preferably truck (2), comprising a commercial vehicle cab (1) according to one of the previous claims.

## Revendications

1. Cabine (1) de véhicule utilitaire, de préférence cabine de conducteur d'un camion (2), comprenant
un dispositif de siège/couchette (3), qui est disposé dans une zone arrière de la cabine (1) de véhicule utilitaire, une partie de dossier (4) et une partie de couchage (5) orientée horizontalement,
la partie de dossier (4) pouvant être déplacée entre une première (6) et une deuxième position d'utilisation (7), de préférence pour régler au choix une configuration canapé ou une configuration lit du dispositif de siège/couchette,
la partie de dossier (4) étant disposée dans la première position d'utilisation (6) sensiblement verticalement et à une certaine distance de la partie de couchage (5) de telle manière que la partie de dossier (4) peut être utilisée comme dossier et la partie de couchage (5) peut être utilisée comme partie de siège pour un utilisateur du dispositif de siège/couchette (3) ; et
la partie de dossier (4) étant disposée, dans la deuxième position d'utilisation (7), horizontalement à côté de la partie de couchage (5) et à la même hauteur que celle-ci pour élargir une surface de couchage (8) de la partie de couchage (5) ; et
comprenant en outre un système d'ajustement (15) pour déplacer la partie de dossier (4) entre la première (6) et la deuxième (7) position d'utilisation ;
le système d'ajustement (15) comprenant au moins un bras pivotant (16), de préférence deux bras pivotants (16), qui est fixé respectivement sur une première extrémité sur la partie de dossier (4) et est fixé de manière pivotante sur une seconde extrémité sur la partie de couchage (5) ou sur un support ou une structure d'appui de la partie de couchage (5) ;
**caractérisée en ce que**
pour ajuster en hauteur la partie de dossier (4) dans la première position d'utilisation (6), le bras pivotant (16) se présente sous la forme d'un bras télescopique.

2. Cabine (1) de véhicule utilitaire selon la revendication 1,
la partie de dossier (4) étant disposée, dans la deuxième position d'utilisation (7), entre un siège de conducteur (9) de la cabine (1) de véhicule utilitaire et une paroi latérale côté passager de la cabine (1) de véhicule utilitaire ; et/ou
une largeur (10) de la cabine (1) de véhicule utilitaire moins une largeur (11) du siège de conducteur (9) étant supérieure à une longueur (12) de la partie de dossier (4) ; et/ou
la partie de dossier (4) pouvant être déplacée entre la première (6) et la deuxième (7) position d'utilisation sans avoir à ajuster le siège de conducteur (9).

3. Cabine (1) de véhicule utilitaire selon l'une des revendications précédentes,
la partie de couchage (5) s'étendant depuis une paroi latérale côté passager de la cabine (1) de véhicule utilitaire jusqu'à une zone derrière un siège de conducteur (9), de préférence jusqu'à une paroi latérale côté conducteur de la cabine (1) de véhicule utilitaire ; ou
une longueur (13) de la partie de couchage (5) correspondant sensiblement à une longueur (12) de la partie de dossier (4), et le dispositif de siège/couchette (3) comprenant une seconde partie de couchage (14), qui est disposée horizontalement derrière le siège de conducteur (9) et à la même hauteur que la partie de couchage (5).

4. Cabine (1) de véhicule utilitaire selon l'une des revendications précédentes,
le système d'ajustement (15) comprenant un dispositif d'arrêt (17) pour arrêter la partie de dossier (4) dans la première position d'utilisation (6) et/ou dans la deuxième position d'utilisation (7).

5. Cabine (1) de véhicule utilitaire selon l'une des revendications précédentes,
le système d'ajustement (15) comprenant deux bras pivotants (16), et
la partie de dossier (4) comprenant un support de coussin et un coussin, qui entoure des deux côtés le support de coussin, et les bras pivotants (16) étant fixés sur des côtés opposés sur le support de coussin.

6. Cabine de véhicule utilitaire selon l'une des revendications précédentes, comprenant en outre
un revêtement (18) de surface de couchage pour les surfaces de couchage (8) de la partie de couchage (5) et de la partie de dossier (4) dans la deuxième position d'utilisation (7), qui est fixé, de préférence est fixé de manière amovible, sur une surface de couchage (8) de la partie de dossier (4) qui est tournée, dans la première position d'utilisation (6), vers une face arrière (19) de la cabine (1) de véhicule utilitaire, et qui est positionné automatiquement sur la surface de couchage (8) de la partie de couchage (5) et de la partie de dossier (4) en déplaçant la partie de dossier (4) de la première (6) dans la deuxième (7) position d'utilisation.

7. Cabine de véhicule utilitaire selon la revendication 6,
un bord du revêtement (18) de surface de couchage étant fixé le long d'un bord supérieur de la partie de couchage (5) tourné vers la face arrière (19) de la cabine du véhicule utilitaire (1), et un autre bord du revêtement (18) de surface de couchage étant fixé le long d'un bord supérieur de la partie de dossier (4) dans la première position d'utilisation (6), s'étendant parallèlement à la face arrière (19) de la cabine (1) de véhicule utilitaire, et/ou
la forme et la surface du revêtement (18) de surface de couchage correspondant à une forme et à une surface de la surface de couchage élargie (8).

8. Cabine (1) de véhicule utilitaire selon la revendication 6 ou 7,
le revêtement (18) de surface de couchage étant fixé de manière amovible à la partie de dossier (4), de préférence au moyen d'une fermeture autoagrippante (20), et/ou
le revêtement (18) de surface de couchage étant fixé de manière amovible sur la partie de couchage (5), de préférence au moyen d'une fermeture éclair (21).

9. Cabine (1) de véhicule utilitaire selon l'une des revendications précédentes, comprenant en outre
un prolongement en forme de plaque et/ou de bande, qui est disposé sur la zone inférieure d'une surface de couchage (8) de la partie de dossier (4) et recouvre, dans la deuxième position d'utilisation (7) de la partie de dossier (4), un espace entre la partie de couchage (5) et la partie de dossier (4).

10. Cabine (1) de véhicule utilitaire selon l'une des revendications précédentes, comprenant en outre
un siège de passager (22), dont le dossier peut être amené vers l'avant dans une position de rangement sensiblement horizontale, la partie de dossier (4) du dispositif de siège/couchette (3) dans la deuxième position d'utilisation (7) étant disposée au-dessus et de préférence à distance du dossier du siège de passager (22) dans la position de rangement.

11. Cabine (1) de véhicule utilitaire selon l'une des revendications précédentes,
dans la première position d'utilisation (6), une distance entre un bord inférieur de la partie de dossier (4) et un côté supérieur de la partie de couchage (5) étant inférieure à 50 cm, par ailleurs de préférence inférieure à 30 cm et/ou inférieure à une largeur de la partie de couchage (5).

12. Véhicule utilitaire (2), de préférence camion (2), comprenant une cabine (1) de véhicule utilitaire selon l'une des revendications précédentes.
